# EUROPEAN PATENT APPLICATION

(11) **EP 4 353 067 A1**
(43) Date of publication of application: **17.04.2024**
(21) Application number: 23201991.9
(22) Date of filing: 05.10.2023
(51) Int. Cl.: A01D 34/82

(54) **WALK BEHIND POWER TOOLS**

(30) Priority: 12.10.2022 US 202263415356 P
(71) Applicant: Techtronic Cordless GP, Anderson, SC 29621 (US)
(72) Inventor: CRAVEN, Jordan, Anderson, 29621 (US); DUNGAN, Amanda, Anderson, 29621 (US); STEPHENS, Jeremiah, Anderson, 29621 (US); TORRENCE, Colby, Anderson, 29621 (US)
(74) Representative: Novagraaf Group

(57) **Abstract**

Walk behind power tools are provided. A walk behind power tool includes a housing; a power source; a motor selectively powered by the power source; a drive shaft; a handle; and a handle adjustment system. The handle adjustment system can be configured to move between different positions relative to the housing. The system can include a handle adjustment grip; at least one cable coupled to the handle adjustment grip at a first end and coupled to a locking wedge at a second end; and a spring. Engagement of the handle adjustment grip in a first direction enables the handle position to be moved relative to the housing. The power tool may have a plurality of cutting assemblies each powered by a respective motor. The power tool may be self-propelled and include a speed control assembly.

## Description

### CROSS-REFERENCE TO RELATED APPLICATIONS

The present application claims priority to U.S. Provisional Patent Application Serial No. 63/415,356 filed on October 12, 2022, the disclosure of which is incorporated by reference herein in its entirety.

### FIELD

The present disclosure relates generally to walk behind power tools, and more particularly to walk-behind lawnmowers and tillers.

### BACKGROUND

Walk behind outdoor power tools are generally utilized in landscaping operations. For instance, lawnmowers are generally utilized in grass cutting operations. In particular, walk behind lawnmowers are often utilized in a manner whereby a user or operator must walk behind and push the lawnmower forward with the user's own force to guide and propel the lawnmower across the ground. Additionally, walk behind lawnmowers thus require an elongated handle for the user to grip and operate, i.e., push, the lawnmower. The elongated handle significantly increases the footprint of the lawnmower, making storage of the lawnmower more difficult. Furthermore, walk behind lawnmowers generally may have a narrower cutting path than riding lawnmowers. Because less width of a distance can be cut by the cutting path of a walk behind lawnmower, the energy expenditure of a user during a mowing operation may be further increased.

Accordingly, improved walk behind power tools are desired in the art. In particular, walk behind power tools which provide improvements to the cutting path and ease of pushing without sacrificing ease of use or storage would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a power tool is provided. The power tool includes: a working tool housing; a power source coupled to the housing; a motor selectively powered by the power source; a drive shaft coupled to the motor and defining an axis of rotation; a handle coupled to the housing; and a handle adjustment system configured to enable the handle to move between different positions relative to the housing. The handle adjustment system comprises a handle adjustment grip; at least one cable coupled to the handle adjustment grip at a first end and coupled to a locking wedge at a second end; and a spring. Engagement of the handle adjustment grip in a first direction enables a position of the handle to be moved relative to the housing.

In accordance with another embodiment, a handle adjustment mechanism configured for use with a walk behind power tool is provided. The handle adjustment mechanism includes a handle configured to be coupled to a housing of the power tool. The handle comprises a first shaft, a second shaft, and a grip portion extending between the first shaft and the second shaft. The handle adjustment mechanism includes a handle adjustment grip, at least one cable coupled to the handle adjustment grip at a first end and coupled to a locking wedge at a second end; and a spring. Engagement of the handle adjustment grip in a first direction enables a position of the handle to be moved relative to a working tool housing of the power tool.

In accordance with another embodiment, a method for adjusting a handle of a walk behind power tool is provided. The method includes steps of: providing a walk behind power tool, the power tool comprising a working tool housing, a handle coupled to the housing, and a handle adjustment system configured to enable the handle to move between different positions relative to the housing; engaging a handle adjustment grip of the handle adjustment system in a first direction; pulling a cable coupled to the handle adjustment grip in the first direction; disengaging a locking wedge of the handle adjustment system from a locked position by pulling with the cable; and pivoting the handle relative to the housing.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a front perspective view of a lawnmower in accordance with embodiments of the present disclosure;
FIG. 2 is a top view of a lawnmower in accordance with embodiments of the present disclosure;
FIG. 3A is a front view of a handle of a lawnmower in accordance with embodiments of the present disclosure;
FIG. 3B is a partial side cutaway view of the handle of FIG. 3A in accordance with embodiments of the present disclosure;
FIG. 3C is a perspective view of a handle adjustment mechanism in accordance with embodiments of the present disclosure;
FIG. 4 is a partial perspective view of a lawnmower with the top cover removed in accordance with embodiments of the present disclosure;
FIG. 5 is a partial bottom view of a lawnmower in accordance with embodiments of the present disclosure;
FIG. 6 is a partial top view of a housing and wheel assembly of a lawnmower in accordance with embodiments of the present disclosure;
FIG. 7A is a partial perspective view of a deck lift system of a lawnmower in accordance with embodiments of the present disclosure;
FIG. 7B is a partial cutaway view of a deck lift handle of a deck lift system of a lawnmower in accordance with embodiments of the present disclosure;
FIG. 8 is a partial bottom view of a debris egress passage of a lawnmower in accordance with embodiments of the present disclosure;
FIG. 9A is an exploded view of a handle of a mulch door of a lawnmower in accordance with embodiments of the present disclosure;
FIG. 9B is a partial perspective view of a mulch door of a lawnmower in a closed position in accordance with embodiments of the present disclosure;
FIG. 9C is a partial perspective view of a mulch door of a lawnmower in an open position in accordance with embodiments of the present disclosure;
FIGS. 10A-C are perspective cross-sectional views of a speed control assembly of a lawnmower in accordance with embodiments of the present disclosure;
FIGS. 11A-C are perspective views of a handle assembly including a speed control paddle of a lawnmower in accordance with embodiments of the present disclosure;

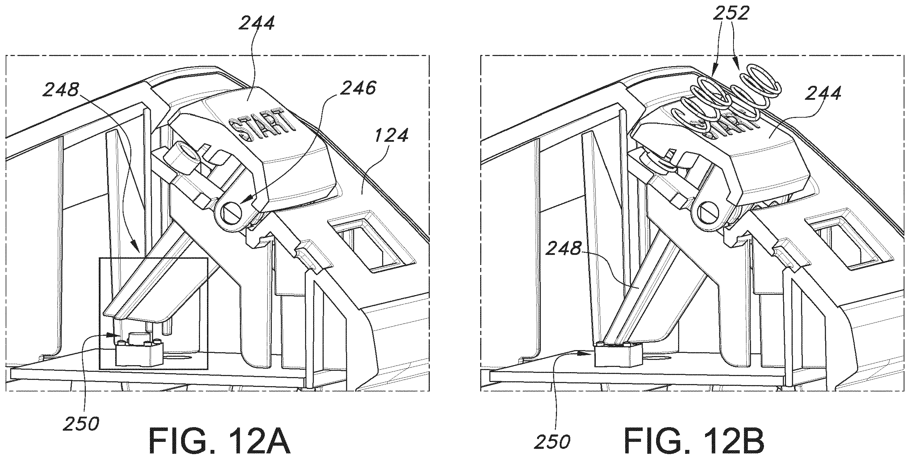

FIGS. 12A-B are perspective partial cutaway views of a start button of a lawnmower in accordance with embodiments of the present disclosure;
FIG. 13A is a perspective view of a battery housing of a lawnmower in accordance with embodiments of the present disclosure;
FIG. 13B is a cross-sectional view of a locking mechanism of a battery housing of a lawnmower in accordance with embodiments of the present disclosure;
FIG. 13C is a perspective view of a locking mechanism of a battery housing of a lawnmower in accordance with embodiments of the present disclosure; and
FIG. 14 is a bottom perspective view of a lawnmower in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, the present invention is directed to a walk behind power tool having an improved handle adjustment, e.g., pivoting or folding, system. The walk behind power tool may be a lawnmower, tiller, or other walk behind outdoor power tool. Additionally, the present invention is directed to a walk behind power tool, e.g., a lawnmower, having a relatively large housing or deck size, an extended trim edge extending beyond the wheel base, and improved structural rigidity to support the large housing or mower deck. The lawnmower may have dual motors and dual blade assemblies to enable a wide cutting path. Further, the present invention is directed to a walk behind power tool having an improved speed control system for controlling the self-propelled speed of the walk behind power tool.

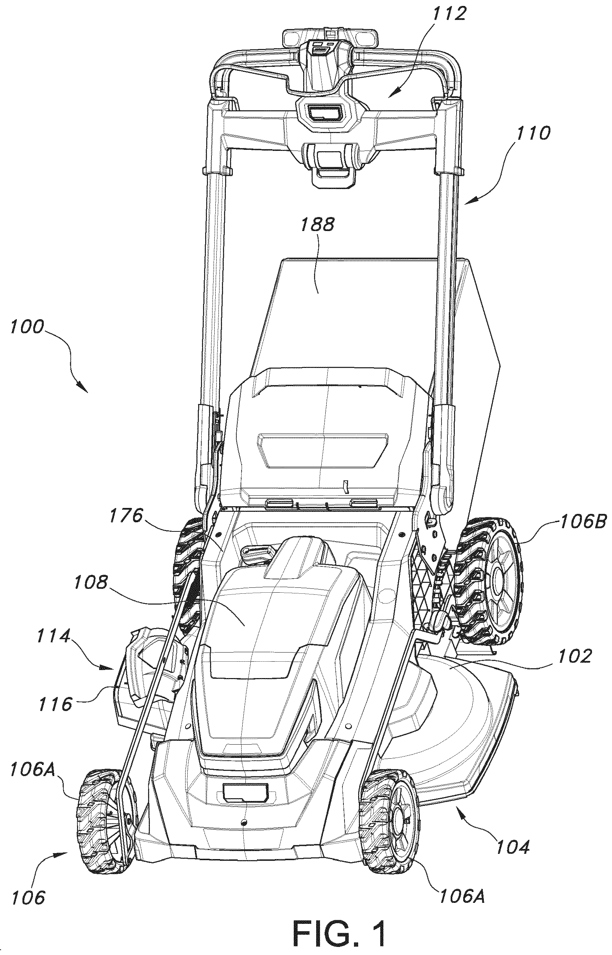

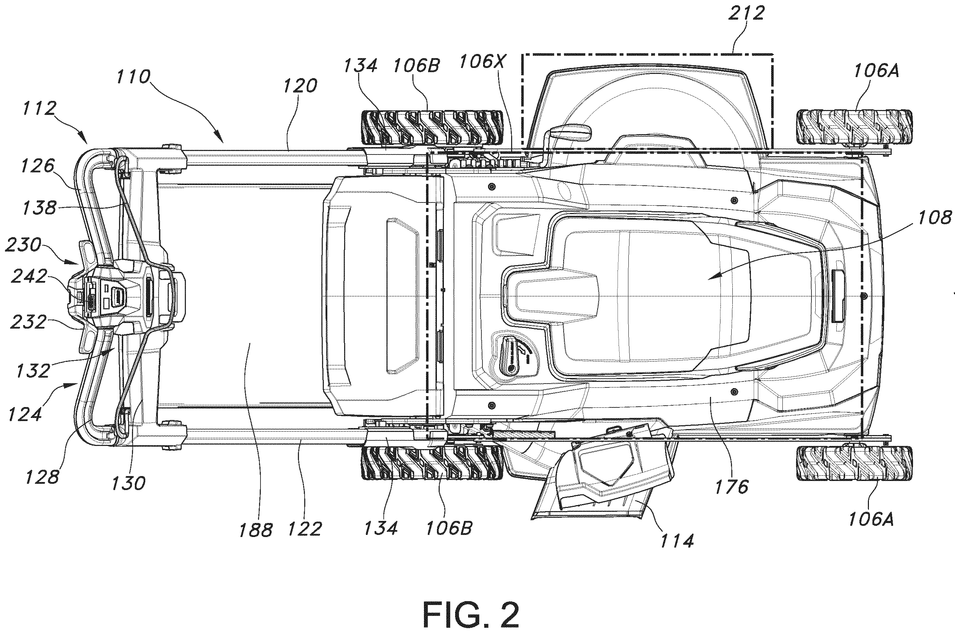

Referring now to the drawings, FIG. 1 illustrates a perspective view of a walk behind power tool 100 such as a lawnmower (an outdoor power tool) in accordance with an exemplary embodiment of the present disclosure. FIG. 2 illustrates a top view of the lawnmower 100 in accordance with an exemplary embodiment of the present disclosure. The lawnmower 100 depicted in FIGS. 1 and 2 is electrically powered using one or more batteries in electrical communication with one or more motors configured to receive power from the one or more batteries and power the lawnmower 100. However, it should be understood that in accordance with another embodiment, the lawnmower 100 may be powered by an alternate power source. For instance, the lawnmower 100 may receive power through an electrical cord plugged into a power source, e.g., a wall outlet. Alternatively, or in addition thereto, the lawnmower 100 may be powered by one or more internal combustion (IC) engines. Furthermore, while the lawnmower 100 depicted in FIGS. 1 and 2 is a powered push mower, in other instances the lawnmower 100 can be a manually powered push mower, i.e., powered by human-provided motive force.

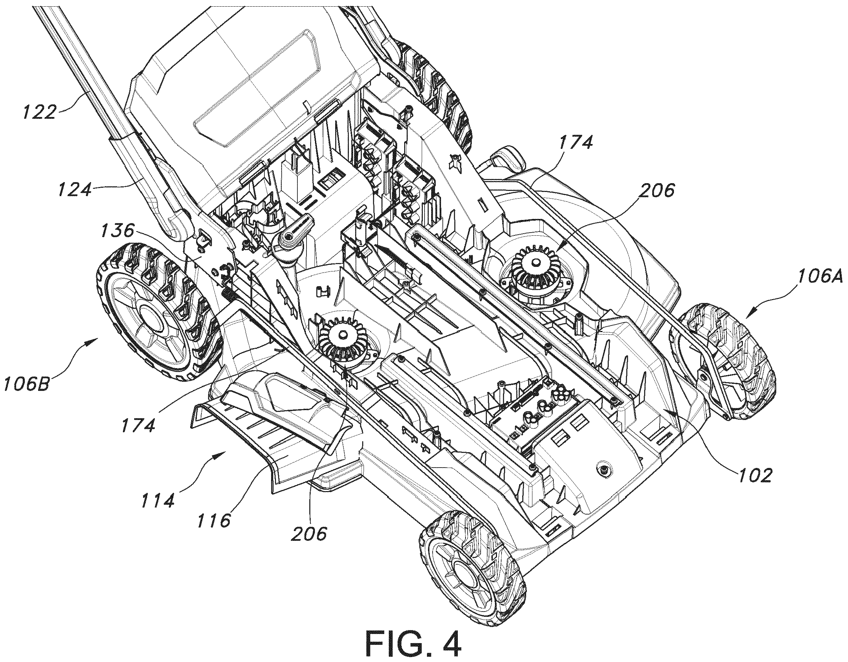

The lawnmower 100 can generally include a housing 102, e.g., a mower deck, defining a cutting area 104. The cutting area 104 can be disposed below the mower deck 102. The mower deck 102 may have sidewalls that extend downward and surround the cutting area 104. A cutting assembly (FIGS. 4-6) can be disposed at the cutting area 104. The cutting assembly may be driven, e.g., rotatably driven, to incur a cutting operation on underlying medium, e.g., grass.

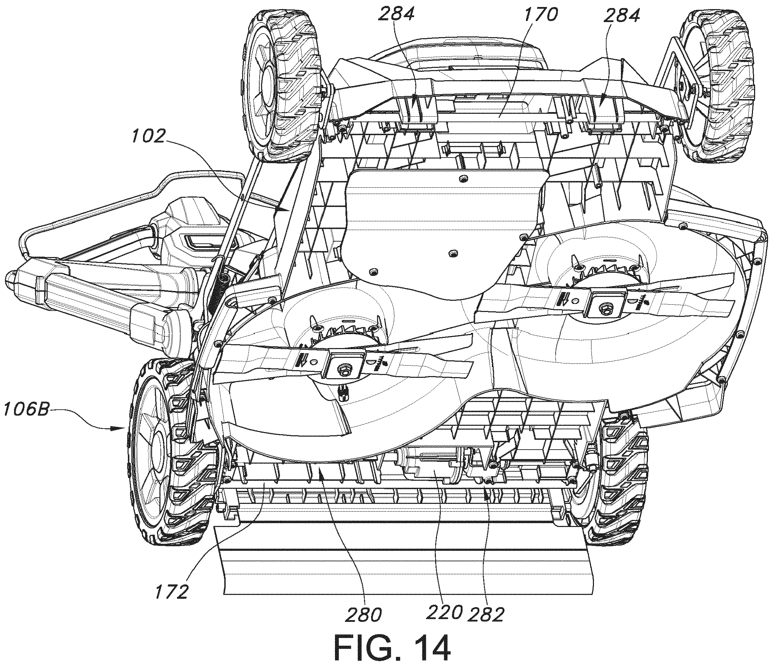

The mower deck 102 can be supported by one or more traction elements configured to interface with the underlying medium and movably support the lawnmower 100. The depicted traction elements include wheels 106. In the depicted embodiment, the wheels 106 include a pair of front wheels 106A and a pair of rear wheels 106B. The pair of front wheels 106A can be connected by a front axle 170, and the pair of rear wheels 106B can be connected by a rear axle 172. The front axle 170 and the rear axle 172 can be coupled to the mower deck 102. For instance, the front axle 170 and the rear axle 172 can be snapped into one or more snaps 284 (also termed snap-on features) in a lower surface of the mower deck 102 (see FIG. 14) to secure the axles 170, 172 in place or can be otherwise operatively coupled to the mower deck 102 in any suitable fastening manner. In certain instances, the front and rear wheels 106A and 106B can define different characteristics as compared to one another. For example, the rear wheels 106B can be larger than the front wheels 106A.

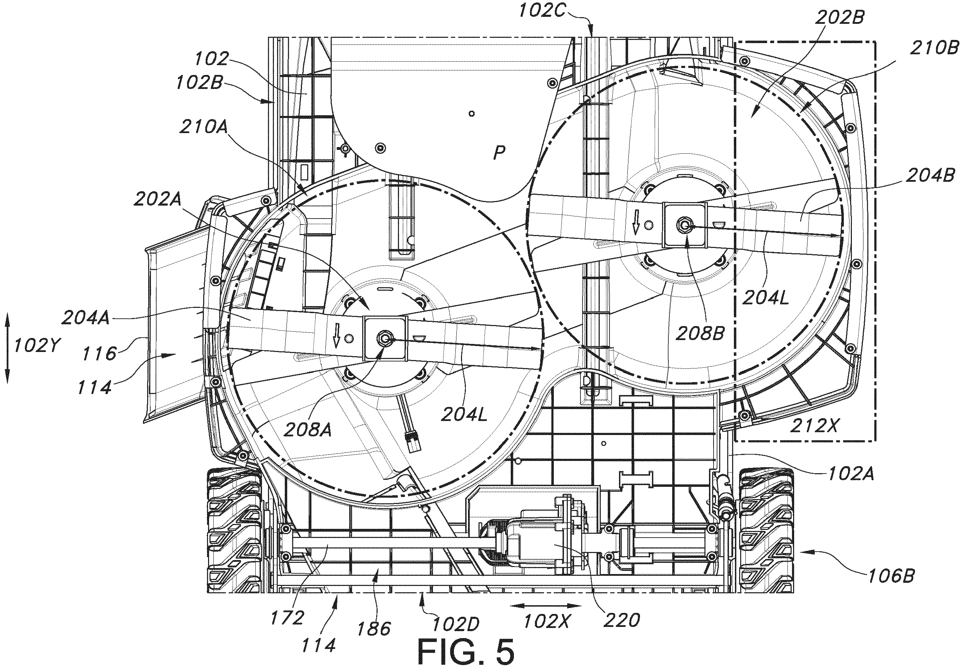

In an embodiment, one or more of the wheels 106 can be driven by one or more motors (FIGS. 4-6). For instance, the rear wheels 106B can be driven by one or more motors, as best seen in FIG. 5. The cutting assembly 200 can similarly be driven by one or more motors (FIG. 4-6). The motors can receive electrical power from one or more batteries 260 disposed in a battery housing 108. In certain instances, the battery or batteries 260 can be removable from the battery housing 108. In other instances, the battery or batteries 260 can be fixed in the battery housing 108. By way of non-limiting example, the battery or batteries 260 can include lithium-ion batteries.

The lawnmower 100 can further include a handle 110 extending rearward and upward from the mower deck 102. In certain instances, the handle 110 can be adjustable relative to the mower deck 102. For example, the handle 110 can be pivotable relative to the mower deck 102, telescopic relative to the mower deck 102, or both. In an embodiment, the handle 110 can include a user interface 112 configured to permit an operator to adjust one or more operating parameters of the lawnmower 100, e.g., to turn on and off the lawnmower 100, to engage a self-propel function of the lawnmower, to release the handle 110 to move between different alignments or positions, a bail 138 to prevent accidental propulsion of the lawnmower 100, a speed adjusting interface, another similar control, or any combination thereof.

The handle 110 can include a first elongated shaft 120 and a second elongated shaft 122 that are each coupled to the mower deck 102 at a lower end thereof and coupled to the user interface 112 at an upper end thereof. The user interface 112 can include a generally U-shaped or W-shaped grip section 124 formed from a left grip 126 and a right grip 128, a cross member 130 extending between the first elongated shaft 120 and the second elongated shaft 122 between the grip section 124 and the mower deck 102. A control assembly 132 can be provided in, on, or adjacent to the grip section 124 and/or the cross member 130. For instance, one or more components of the control assembly 132 can be incorporated into and/or connecting between the grip section 124 and the cross member 130.

The first elongated shaft 120 and second elongated shaft 122 can each be coupled to a handle bracket 134 mounted to the mower deck 102. The handle brackets 134 each may respectively be coupled to a receiving plate 136 (FIG. 4) at the mower deck 102. The handle 110 can be pivotably coupled to the mower deck 102 by pivoting the handle brackets 134 relative to the respective receiving plates 136. The receiving plates 136 can form a "nut plate" that may be received within a complementary opening or slot (not shown) that is formed in, e.g., molded in, the mower deck 102. The nut plate can include one or more extruded and tapped holes to receive bolts therethrough in order to couple the handle brackets 14 to the mower deck 102 without fumbling with individual nuts or fasteners. An exemplary embodiment of a handle adjustment mechanism configured for use with a lawnmower will be described in further detail below.

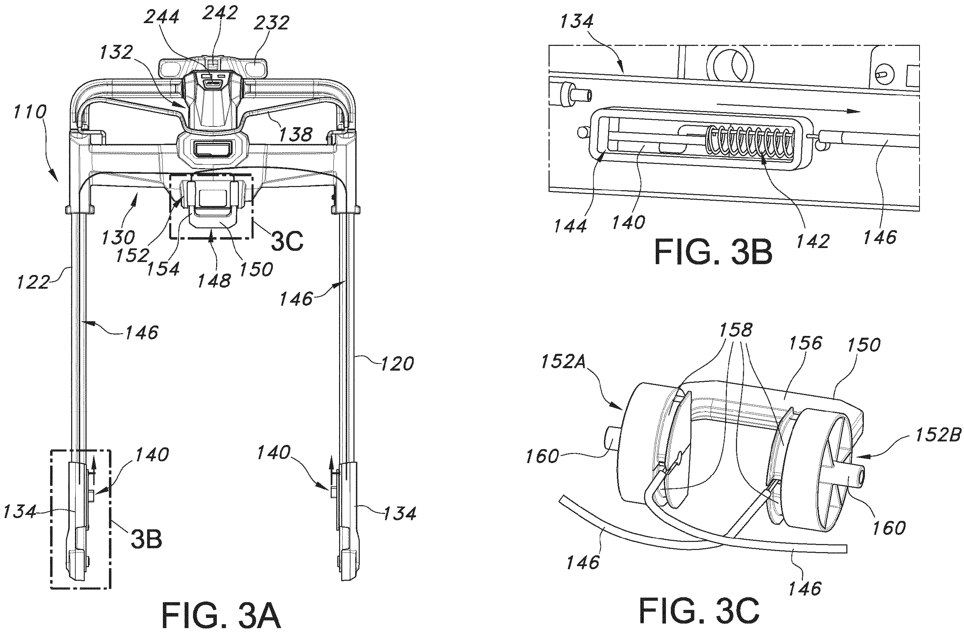

As shown in FIGS. 3A-3B, a locking wedge 140 may be disposed within a handle bracket 134. The locking wedge 140 may be seated within a locking seat 144 of the handle bracket 134. A spring 142 may be disposed adjacent to the locking wedge 140, e.g., proximate to either one of the first elongated shaft 120 or the second elongated shaft 122. The spring 142 may be a compression spring, as shown in FIGS. 3A-3B, a torsion spring, a leaf spring, an extension spring, or any other suitable type of spring. The spring 142 may be configured to urge the locking wedge 140 into the locking seat 144 in a direction away from the grip section 124 and toward the mower deck 102, i.e., in a generally downward direction, which may be considered the "locked position". A cable 146 may be coupled to the locking wedge 140. An opposite end of the cable 146 may be coupled to a handle adjustment grip 148. The handle adjustment grip 148 may be manipulated by a user to be engaged in a first direction to pull the cable 146 toward the grip section 124, thereby pulling the locking wedge 140 away from the locking seat 144 in the direction illustrated by the arrows in FIG. 3A and compressing the spring 142 to disengage the locking wedge 140 from the handle bracket 134. When the locking wedge 140 is disengaged from the handle bracket 134, the handle 110 can be pivoted such that the grip section 124 may be brought nearer to the mower deck 102.

FIGS. 3A and 3C illustrate the handle adjustment grip 148 in detail. The handle adjustment grip 148 includes a user engagement section 150 that may extend generally parallel to the cross member 130 and/or the grip section 124. The handle adjustment grip 148 further includes one or more wheels 152. For instance, a first wheel 152A and a second wheel 152B may be provided on opposite sides of the handle adjustment grip 148. One or more connecting sections 154 may be provided between the user engagement section 150 and the wheel(s) 152. For instance, a first connecting section may be proximate to the first elongated shaft 120 and a second connecting section may be proximate to the second elongated shaft 122. The wheel(s) 152 include an arcuate groove 156 configured to receive the cable 146 therein. More specifically, a cable 146 can be coupled to a wheel 152 within the arcuate groove 156 at a cable attachment point 158 and, when the wheel is rotated, the cable 146 can be received within the arcuate groove 156 about the circumference of the wheel 152. The cable 146 can be pulled into the arcuate groove 156 and wrapped in a circumferential direction about the wheel 152 when the handle adjustment grip 148 is engaged, e.g., rotated, in the first direction.

In one aspect of the present invention, a cable 146 may extend along or within the first elongated shaft 120 and be coupled to the wheel adjacent to the second connecting section 154, nearer to the second elongated shaft 122. Similarly, a cable 146 may extend along or within the second elongated shaft 122 and be coupled to the wheel adjacent to the first connecting section 154, nearer to the first elongated shaft 120. In this arrangement, the cables 146 may be crossed in between the wheels 152 as shown in FIG. 3A. This arrangement can extend the length of the cables 146 to provide additional cable length to enable the cables 146 to be wrapped around the respective wheels 152 when the handle adjustment grip 148 is engaged, e.g., rotated.

Each wheel 152 may further include an axial protrusion 160 configured to be received within the cross member 130. The axial protrusion 160 may have a round or arcuate, e.g., circular, outer cross-sectional shape, for instance, the axial protrusion 160 may be generally cylindrical in shape. The axial protrusion(s) 160 can form a mounting axis about which the wheel(s) 152 can rotate within the cross member 130 when the handle adjustment grip 148 is engaged in the first direction.

Turning now to FIGS. 4-6, the cutting assembly 200 of the lawnmower 100 will be described in further detail. The cutting assembly 200 may include one or more blade assemblies 202 mounted below the mower deck 102 and each comprising a cutting blade 204. Each blade assembly 202 may be powered by a respective motor 206. Each motor 206 may have a drive shaft 208 coupled to the motor 206 and forming an axis of rotation for a respective cutting blade 204. For instance, the motor 206 can be mounted above, below and/or through the mower deck 102, as shown in FIG. 4, and the drive shaft 208 may extend below the mower deck 102 to the cutting blade 204. The cutting blade 204 can extend radially in opposite directions from the drive shaft 208, e.g., having a generally equal length 204L extending in each opposing direction from the drive shaft 208 to form a cutting path 210 with a generally circular-shaped circumference.

As illustrated in FIGS. 4-6, in an exemplary embodiment of the present invention, the cutting assembly 200 may include a first blade assembly 202A and a second blade assembly 202B. The first blade assembly 202A may include a cutting blade 204A, a motor 206A and a drive shaft 208A and may define a first cutting path 210A. The second first blade assembly 202B may include a cutting blade 204B, a motor 206B and a drive shaft 208B and may define a second cutting path 210B. Both the first motor 206A and the second motor 206B may be powered by the battery 260. The first motor 206A and the second motor 206B may be operated simultaneously and powered by the battery simultaneously. However, the present inventors contemplate possible scenarios in which one or the other of the motors 206A, 206B may be independently controlled and powered rather than simultaneously controlled and powered.

The first blade assembly 202A and the second blade assembly 202B may be offset relative to each other such that the respective first cutting path 210A and second cutting path 210B do not intersect. For instance, the mower deck 102 may define a first direction 102X, e.g., a lateral direction, extending between a first side 102A and a second side 102B, and a second direction 102Y, e.g., a longitudinal direction, extending between a third side 102C and a fourth side 102D. The first motor 206A and the second motor 206B may be offset from each other in the first direction 102X, the second direction 102Y, or both. As shown in FIGS. 4-6, the motors 206A and 206B may be offset in both the first direction 102X and the second direction 102Y to maximize a total width 104X in the first direction 102X of the cutting area 104. The width 104X of the cutting area 104 can be in a range from about 20 inches to about 35 inches, such as from about 25 inches to about 33 inches, for instance, about 30 inches in one particular embodiment. The width 104X in inches can be referred to as the "deck size" of the mower deck 102 or lawnmower 100 in some instances. For instance, when the width 104X is about 30 inches, the lawnmower 100 may be referred to as having a "30 inch deck."

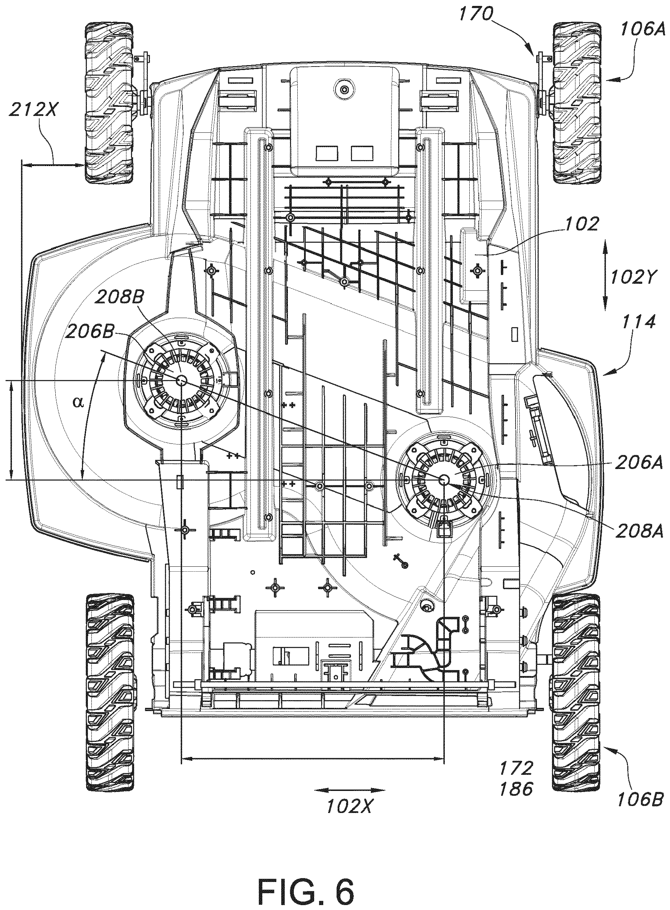

As shown in FIG. 6, a center point of each respective motor 206A, 206B, i.e., the drive shafts 208A, 208B, may be offset from each other along the first direction 102X by a distance in a range from about 10 inches to about 20 inches, such as from about 12 inches to about 18 inches, such as from about 14 inches to about 16 inches. In an embodiment, the drive shafts 208A and 208B can be offset a distance of about 14.5 inches in the first direction 102X. The drive shafts 208A and 208B may be offset from each other along the second direction 102Y by a distance in a range from about 3 inches to about 8 inches, such as from about 4 inches to about 7 inches, e.g., from about 5 inches to about 6 inches. In an embodiment, the drive shafts 208A and 208B can be offset a distance of about 5.5 inches in the second direction 102Y. As measured from the location of the first drive shaft 208A, the second drive shaft 208B is offset at an angle α in a range from about 10 degrees to about 40 degrees, such as from about 15 degrees to about 30 degrees. In an embodiment, the drive shaft 208B of the motor 206B can be offset at an angle of about 20-21 degrees from the drive shaft 208A of the motor 206A.

Turning back to FIG. 5, at a closest point P between the first cutting path 210A and the second cutting path 210B, the first cutting path 210A and the second cutting path 210B may be separated by a distance in a range from about 1 mm to about 20 mm, e.g., from about 2 mm to about 10 mm, for example, from about 3 mm to about 8 mm. In an embodiment, the distance between the first cutting path 210A and the second cutting path 210B at the closest point P may be about 6 mm. The present inventors have found that by offsetting the cutting assemblies 202A and 202B along the first direction 102X and the second direction 102Y, the distance between the cutting paths 210A and 210B can be effectively minimized to reduce the noticeability of any portion of vegetation between the cutting paths 210A and 210B while maximizing the total width of the cutting area 104.

Moreover, as best illustrated in FIGS. 2, 5 and 6, one or more of the cutting paths 210A and 210B may extend beyond a relative width of the wheels 106 along the mower deck 102. A wheel base area 106X may be defined by the front wheels 106A and the rear wheels 106B in the lateral direction 102X and longitudinal direction 102Y. For instance, the front axle 170 and rear axle 172 can define front and rear sides of the wheel base area 106X. As shown in FIG. 2 and FIG. 5, a trim edge area 212 may extend outside the wheel base area 106X. The trim edge area 212 may be formed by one of the cutting paths 210A, 210B. For instance, as shown in FIG. 5, the trim edge area 212 extends along the first side 102A of the mower deck 102, on an opposite lateral side of the mower deck 102 from the debris egress location 114. The trim edge area 212 is formed by a portion of the second cutting path 210B that extends beyond the wheel base area 106X. As shown, the trim edge area 212 extends longitudinally between the front wheels 106A and rear wheels 106B. The trim edge area 212 can have a width 212X in the first direction 102X in a range from about 1 inch to about 10 inches, such as from about 2 inches to about 8 inches, e.g., from about 3 inches to about 6 inches. A length of the trim edge area 212 in the second direction 102Y can be equal to or less than a length of the cutting blade 204.

As described above, the lawnmower 100 of the present invention has a relatively large "deck size." In turn, the lawnmower 100 of the present invention may be provided with one or more reinforcing structures to support the weight and/or girth of the mower deck 102 having multiple motors, e.g., at least motors 206A and 206B, mounted thereto in order to improve the rigidity of the mower deck 102. The reinforcing structure(s) can include one or more connecting bars 174 extending between the front axle 170 and the rear axle 172. For instance, a connecting bar 174 can extend between the front axle 170 and the rear axle 172 and above the mower deck 102, as shown in FIG. 4. In one exemplary aspect, two connecting bars 174 may be provided, with one connecting bar between the front axle 170 and the rear axle 172 along the first side 102A of the mower deck 102 and another connecting bar 174 between the front axle 170 and the rear axle 172 along the second side 102B of the mower deck 102. Each connecting bar 174 can optionally extend in a straight line or may include one or more angled sections.

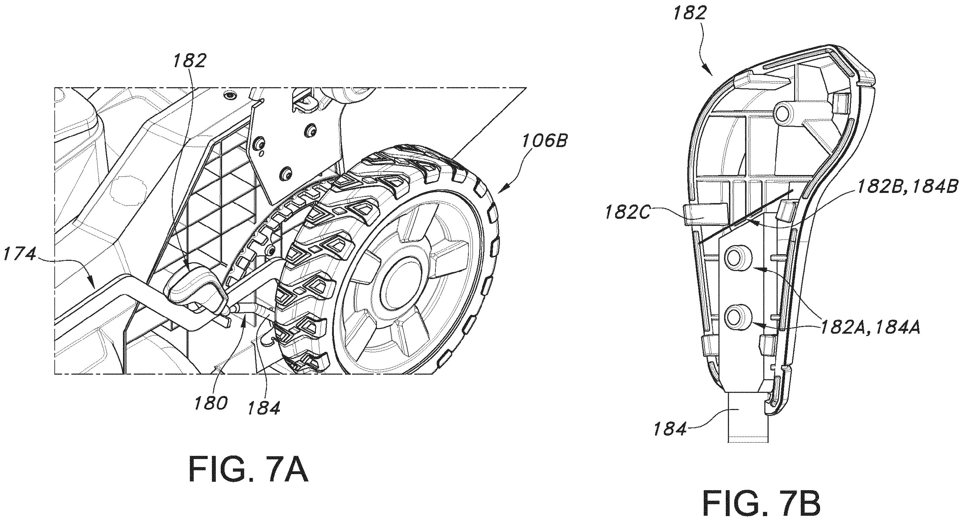

The one or more connecting bar(s) 174 can improve the rigidity of the mower deck 102, as described above. In turn, a deck lift system 180 provided to raise or lower the mower deck 102 relative to the surface on which the wheels 106 are supported, may have improved rigidity and stability resulting from the connecting bar(s) 174. The deck lift system 180 can include a height adjustment knob 182 configured to be manipulated by a user to select a desired height of the mower deck 102 from a plurality of height options. A height adjust lever 184 coupled to the height adjustment knob 182 can raise or lower the mower deck 102. As shown in FIGS. 7A-7B, the height adjustment knob 182 can connect to the height adjust lever 184 by one or more mating coupling features. For example, the height adjust lever 184 can have one or more holes 184a that are configured to receive one or more poke yoke protrusions 182a of the height adjustment knob 182. Additionally or alternatively, the height adjustment knob 182 can include one or more angled ribs 182b configured to mate and match with an angled top edge 184b of the height adjust lever 184. The height adjustment knob 182 can be formed from two mated halves that snap together, e.g., by one or more snap or snap-on features 182c on either side of the height adjust lever 184, as shown in FIGS. 7A-7B.

As previously described, the lawnmower 100 defines the cutting area 104 where the cutting operation is performed by the cutting assembly. The cutting area 104 can define at least one debris egress location 114. The debris egress location 114 can be located, e.g., at a side of the mower deck 102 and generally beneath the mower deck 102. The debris egress location 114 can generally include a passageway configured to allow egress of debris, e.g., clippings, from the cutting area 104 so as to prevent clogging of debris within the cutting area 104 and to distribute the debris more evenly over neighboring terrain. In the depicted illustration, the debris egress location 114 may include a chute 116 configured to guide the debris out of the debris egress location 114 and prevent debris from discharging in all directions. The chute 116 may further provide protection to the operator and any nearby people against flying debris which might cause bodily injury or damage.

While not illustrated, the mower deck 102 can include another debris egress location located at a different position than the debris egress location 114. In a particular embodiment, the other debris egress location can be disposed at a rear end of the mower deck 102. More particularly, the other debris egress location can extend through the sidewall of the mower deck 102 at the rear of the mower deck 102. Unless stated otherwise, reference made hereinafter to the debris egress location is intended to refer to the debris egress location disposed at the second side 102B of the mower deck 102.

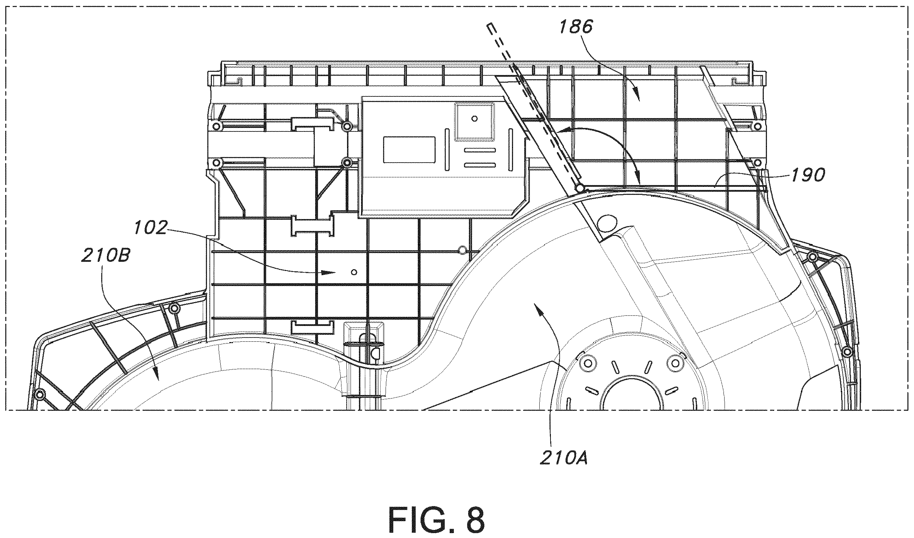

Moreover, as best shown in FIGS. 5, 8 and 9A-C, another debris egress location 114 can be disposed at the rear side (also referred to as the fourth side 102D) of the mower deck 102. The rear debris egress location 114 can include a passage 186 formed in a lower side of the mower deck 102 to an outlet to which a mulch bag 188 may be attached. A pivoting mulch door 190 may be provided at the outlet. The mulch door 190 can be formed as a flat plate having a shape or profile that complements at least a portion of the passage 186. The mulch door 190 can pivot within the passage 186 about an axis that is angled (i.e., non-parallel) with respect to a vertical direction. During use, the mulch door 190 may pivot within the passage 186 to selectively close the passage 186 and permit and/or block grass clippings from passing therethrough. A handle 192 can be coupled to the mulch door 190. The handle 192 can protrude through a top cover 176 of the lawnmower 100 such that a user can manually operate the position of the mulch door 190 by manipulating the handle 192. The handle 192 can be coupled to the mulch door 190 by a handle adapter 194 and a door adapter 196 each extending parallel to the pivot axis of the mulch door 190.

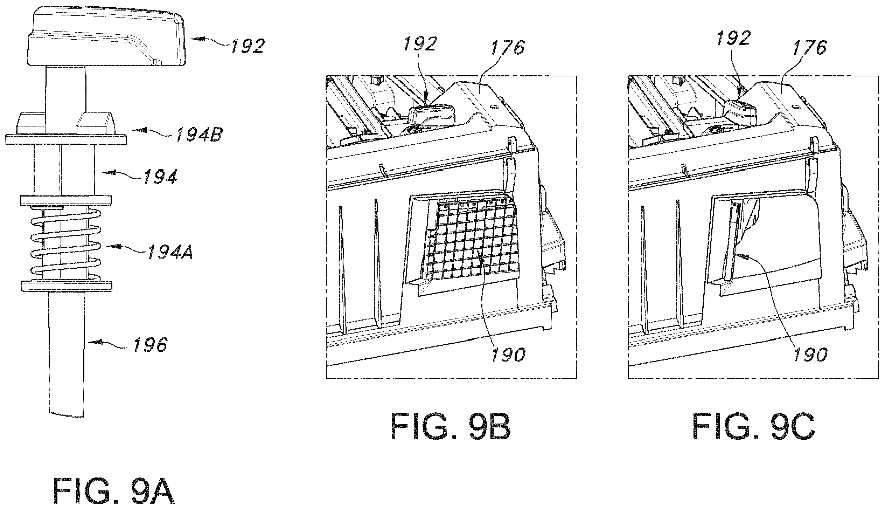

The mulch door 190 can be configured to only be held in (a) an opened position, wherein the outlet of the passage 186 is unblocked and permits grass clippings to travel through the passage 186 to a mulch bag 188 attached to the lawnmower; and (b) a closed position, wherein the outlet of the passage 186 is fully blocked to prevent grass clippings from escaping the cutting area 104 through the outlet. Specifically, the handle adapter 194, which includes a spring 194A and a cover 194B, can connect the pivoting mulch door 190 to the handle 192 and selectively locks in a pair of predefined positions that correspond to the opened position and the closed position of the mulch door. The spring 194A can be engaged about an outer circumferential surface of the door adapter 196, as shown in FIG. 9A. For instance, pressing down on the handle 192 (i.e., along the axis of rotation) may disengage or unlock the handle adapter 194. Contrariwise, releasing the handle 192 allows the handle 192 (and thereby the mulch door) to lock in the opened position or the closed position. If between these positions, the mulch door 190 may optionally not be locked, such that the door 190 can still pivot to either opened or closed position.

As briefly described above, and best shown in FIG. 5, a motor 220 can be provided to power one or more of the wheels 106. For instance, a motor 220 can be coupled to the rear axis 172 and drive rotation of the rear wheels 106B. The motor 220 can be powered by electrical power from the battery 260. It is to be understood that the battery 260 can simultaneously power the motor 220 to drive the wheel(s) 106 and one or more of the motors 206A, 206B to drive rotation of one or more of the blade assemblies 202A, 202B.

Moreover, the lawnmower 100 may include a speed control assembly 230 (FIG. 2) that controls the operation of the motor 220 and, thereby, the powered speed of the wheels 106. More specifically, the speed control assembly 230 controls the ground travel speed of the lawnmower 100 based on at least one user input as described in further detail below.

The speed control assembly 230 includes a user input paddle 232. The user input paddle 232 may be operatively coupled to the handle 110. For instance, the user input paddle 232 may be coupled to the grip section 124 of the handle 110, e.g., between the left grip section 126 and the right grip section 124 as shown in FIG. 2. The user input paddle 232 can be rotatably or pivotably coupled to the grip section 124 between a plurality of positions. The ground travel speed of the lawnmower 100 can be controlled based on the position of the user input paddle 232.

More specifically, the user input paddle 232 is coupled to a rotating element 234. The rotating element 234 may include a magnet 236 coupled thereto. A Hall sensor 238 may be disposed within the grip portion 124 in proximity to the user input paddle 232 and the magnet 236. As the user input paddle 232 is rotated in a downward direction towards the ground by a user from a first position or resting position into a subsequent position the magnet 236 is moved further from the Hall sensor 238. The change in strength of the magnetic field between the magnet 236 and the Hall sensor 238 causes a change in the voltage output of the Hall sensor 238. The Hall sensor 238 is configured to convert the mechanical movement of the user input paddle 232 into an electrical signal. Specifically, the Hall sensor 238 may be coupled with the control assembly 132, and more specifically, to a control board 240, e.g., a printed circuit board (PCB,) of the control assembly 132. As the signal received from the Hall sensor 238 changes, the control board 240 may send signals to the motor 220 to increase or decrease the motor speed and thereby increase or decrease the self-propelled ground travel speed of the lawnmower 100.

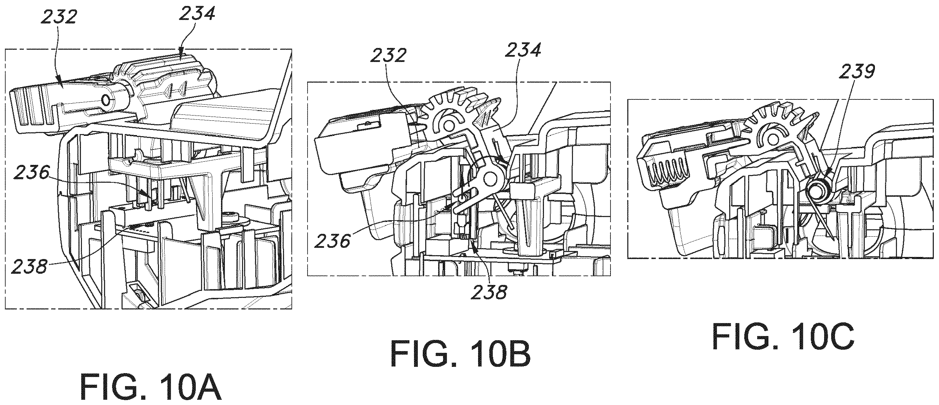

Additionally, as shown in FIG. 10C, a torsion spring 239 may be provided in cooperation with the rotating element 234 to return the user input paddle 232 to the first or resting position.

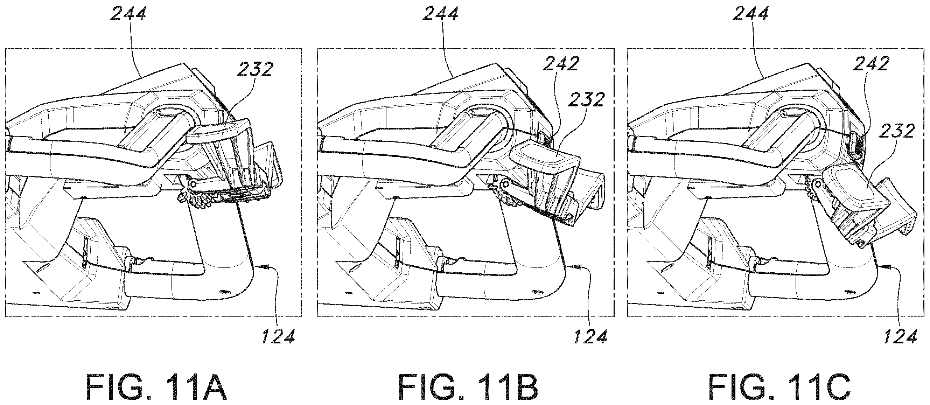

As shown in FIG. 11A, in a first or resting position of the user input paddle 232, in which the user input paddle 232 is in its upward-most position relative to the ground, the control board 240 may be configured not to send any signal to drive power to the motor 220. In this position, the lawnmower 100 has no self-propulsion. A user may manually push the lawnmower 100 using the wheels 106, but the wheels 106 are not driven by the motor 220.

Then, as shown in FIG. 11B, in at least one intermediate position, the control board 240 may be configured to initiate providing power from the battery 260 to the motor 220 to increase the ground travel speed of the lawnmower 100. There may be one or more intermediate positions of the user input paddle 232 to cause the motor 220 to drive the wheels 106 at one or more intermediate speeds that are greater than zero velocity and less than a maximum velocity.

Finally, as shown in FIG. 11C, in a final position of the user input paddle 232 in its downward-most position relative to the ground and furthest from the grip portion 124, the control board 240 may be configured to send a maximum drive power signal to the motor 220 to drive the wheels 106 at a maximum ground travel speed. In this position, the self-propulsion of the lawnmower 100 will increase until a maximum travel speed is reached.

The maximum speed of the self-propulsion can be controlled by a self-propel speed slider 242. The slider 242 may set the maximum self-propel speed of the motor 220. The self-propel speed can be adjusted from zero self-propulsion up to the maximum set by the slider 242 using the paddle 232.

While the mechanical movement of the user input paddle 232 can be translated into an electrical signal to control the self-propulsion of the lawnmower 100 via the motor 220 powering the wheels 106, the user input paddle 232 does not control or adjust the rotational speed of the blade motors 206A, 206B.

The control assembly 132 of the lawnmower 100 may further include a start button 244. The start button 244 can be disposed on the grip portion 124, the cross member 130, or between the grip portion 124 and the cross member 130. In one aspect of the present invention, the start button 244 may be engaged inward by a user toward the handle grip portion 124 in a manner that pivots the start button 244 about a pivot point or axis 246 and compresses one or more springs 252, e.g., compression springs or any other suitable type of spring, beneath the start button 244. A stem 248 extending beneath the start button 244 may be configured to close an electrical switch 250 when the start button 244 is engaged into an "on" position. The electrical switch 250 may be coupled with the control board 240. Thus, when the start button 244 is engaged and the springs 252 are compressed, the stem 248 closes the electrical switch 250, thereby sending an electrical control signal to the control board 240 to enable power to be turned on from the battery 260.

The control assembly 132 may further include a bail handle 138, as best seen in FIG. 3A. The bail handle 138 may be mechanically and/or electrically coupled to the control board 240. The bail handle 138 may have any suitable shape or design. For instance, as shown in FIG. 3A, the bail handle 138 can have a complementary shape to the grip portion 124 of the handle 110 and may be pivotally coupled to the respective ends of the cross member 130 and extend toward the grip portion 124 such that a user may grip one or both sides of the bail handle 138 in contact with the grip portion 124. In other contemplated aspects of the present invention, there may be two bail handles 138, each corresponding with a respective one of the right and left grips 126 and 128 of the grip portion 124. In such an arrangement, both bail handles 138 may be required to be engaged to enable the lawnmower 100 to be turned on.

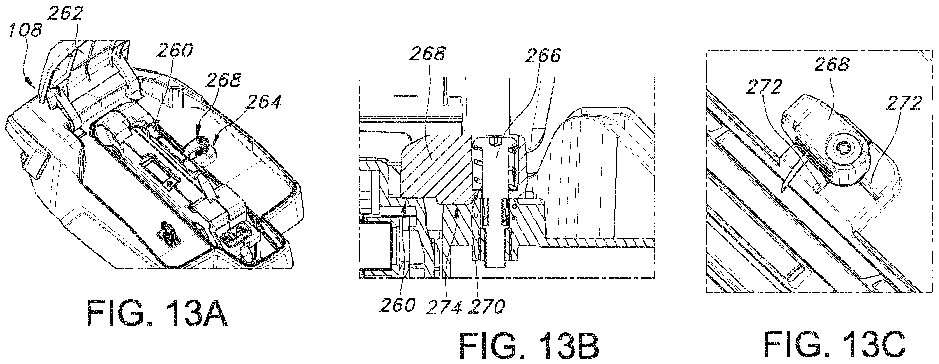

As shown in FIGS. 1 and 13A-C, the lawnmower 100 may include a battery housing 108 within the top cover 176 for enclosing a battery 260. The battery housing 108 may include a battery housing cover 262. Additionally, the battery 260 can be secured in place within the battery housing 108 by a battery locking mechanism 264. The battery locking mechanism 264 may include a lever 266 including a rotatable handle portion 268 and a spring 270. The spring 270 exerts a force onto the lever 266 to retain the lever 266 in place, e.g., within a detent 272 of the battery housing 108. For example, the lever 266 may have a complementary notch 274 configured to be received within a detent 272 of the battery housing 108. When the battery 260 is disposed within the battery housing 108, the lever handle portion 268 can be turned to a first lever position in a direction perpendicular to the battery 260, thereby securing the battery 260 in place. When a user desires to remove the battery 260, the handle portion 268 can be rotated, e.g., 90 or 180 degrees, away from the battery 260 so that the battery 260 can be removed. For instance, the handle portion 268 can be pulled upward, moving the notch 274 out of the detent 272; however, the handle portion 268 is not required to be pulled upward in order to rotate away from the battery 260. The battery locking mechanism 262 can enable the lawnmower 100 to be stored in any orientation, e.g., vertically, without the battery 260 becoming dislodged from its position within the battery housing 108.

FIG. 14 illustrates further features of the mower deck 102 according to aspects of the present invention. A baffle 280 can be integrated into a lower side of the mower deck 102, e.g., to dampen vibrations and/or noise. For instance, the baffle 280 can be integrally formed with the mower deck 102, e.g., by integrally molding the baffle 280 during formation of the mower deck 102. Similarly, the lower side of the mower deck 102 can include one or more pockets and/or slots 282 integrally formed therein that are configured to receive motor controllers or other necessary features. The pockets and/or slots 282 can be formed to receive and contain the motor controller(s) without the need for providing any additional fasteners. The pockets and/or slots 282 can be integrally formed with the mower deck 102, e.g., by integrally molding the slots 282 during formation of the mower deck 102. One or more snaps 284 can be integrally formed with the mower deck 102 to form couplings for receiving other components of the lawnmower 100, such as the front axle 170 and/or rear axle 172, without the need for additional fasteners.

Further aspects of the invention are provided by one or more of the following embodiments:
A power tool includes: a working tool housing; a power source coupled to the housing; a motor selectively powered by the power source; a drive shaft coupled to the motor and defining an axis of rotation; a handle coupled to the housing; and a handle adjustment system configured to enable the handle to move between different positions relative to the housing. The handle adjustment system comprises a handle adjustment grip; at least one cable coupled to the handle adjustment grip at a first end and coupled to a locking wedge at a second end; and a spring. Engagement of the handle adjustment grip in a first direction enables a position of the handle to be moved relative to the housing.

The power tool of any one or more of the embodiments, further comprising at least one handle bracket extending from the housing to the handle to couple the housing to the handle, wherein engagement of the handle adjustment grip in the first direction pulls the at least one cable such that the locking wedge at the second end of the cable is moved upward away from the housing to separate the handle from the handle bracket.

The power tool of any one or more of the embodiments, wherein a grip section of the handle can be moved toward the housing when the handle and the handle bracket are separated.

The power tool of any one or more of the embodiments, wherein the
spring is configured to urge the locking wedge toward the handle bracket when the cable is not pulled by the handle adjustment grip.

The power tool of any one or more of the embodiments, wherein the handle adjustment grip comprises at least one arcuate groove, wherein the at least one cable is coupled to the at least one arcuate groove and the at least one cable is configured to be pulled into the at least one arcuate groove in a circumferential direction when the handle adjustment grip is engaged in the first direction.

The power tool of any one or more of the embodiments, wherein the arcuate groove is formed about a circumference of a wheel of the handle adjustment grip.

The power tool of any one or more of the embodiments, wherein the handle comprises a first elongated shaft, a second elongated shaft, and a grip section extending between the first elongated shaft and the second elongated shaft, further wherein the at least one cable extends within one of the first elongated shaft and the second elongated shaft.

The power tool of any one or more of the embodiments, wherein the at least one cable comprises a first cable and a second cable, wherein the first cable extends within the first elongated shaft and the second cable extends within the second elongated shaft.

The power tool of any one or more of the embodiments, wherein the handle adjustment grip has a first connecting section adjacent to the first elongated shaft and a second connecting section adjacent to the second elongated shaft, wherein the first cable is coupled near second connecting section of the handle adjustment grip and the second cable is coupled near the first connecting section of the handle adjustment grip.

The power tool of any one or more of the embodiments, wherein engagement of the handle adjustment grip in the first direction enables a grip section of the handle to be moved towards the housing.

The power tool of any one or more of the embodiments, wherein the handle adjustment grip is coupled to the grip section of the handle, further wherein the handle adjustment grip comprises a user engagement section extending from the grip section of the handle and at least one wheel rotatably mounted within the grip section of the handle.

The power tool of any one or more of the embodiments, wherein engagement of the handle adjustment grip in the first direction comprises rotation of the handle adjustment grip about an axis formed by a mounting axis of the at least one wheel within the grip section of the handle.

The power tool of any one or more of the embodiments, wherein the housing further comprises a debris egress location comprising a door configured to close or open an outlet of the debris egress location, wherein the door comprises a rotatable handle configured to pivot the door between a closed position and an open position.

The power tool of any one or more of the embodiments, wherein the power source comprises a battery, further comprising a battery locking mechanism configured to secure the battery in place relative to the housing.

The power tool of any one or more of the embodiments, wherein the battery locking mechanism comprises a lever and a spring, wherein in a first lever position, the spring exerts a force onto the lever to secure the lever into a detent on the battery, and in a second position, the spring exerts a force onto the lever to secure the lever into a detent in the housing, wherein the lever is rotatable from the first position to the second position.

The power tool of any one or more of the embodiments, wherein the housing comprises a baffle integrally formed on a lower side of the housing.

The power tool of any one or more of the embodiments, wherein the housing comprises at least one slot integrally formed with the housing configured to receive a motor controller therein.

The power tool of any one or more of the embodiments, wherein the housing comprises one or more snap-on features configured to secure one or more of an axle and a top cover of the power tool in place relative to the housing.

A handle adjustment mechanism configured for use with a walk behind power tool includes a handle configured to be coupled to a working tool housing of the power tool. The handle comprises a first shaft, a second shaft, and a grip portion extending between the first shaft and the second shaft. The handle adjustment mechanism includes a handle adjustment grip, at least one cable coupled to the handle adjustment grip at a first end and coupled to a locking wedge at a second end; and a spring. Engagement of the handle adjustment grip in a first direction enables a position of the handle to be moved relative to the working tool housing of the power tool.

A method of adjusting a handle of a walk behind power tool includes steps of: providing a walk behind power tool, the power tool comprising a working tool housing, a handle coupled to the housing, and a handle adjustment system configured to enable the handle to move between different positions relative to the housing; engaging a handle adjustment grip of the handle adjustment system in a first direction; pulling a cable coupled to the handle adjustment grip in the first direction; disengaging a locking wedge of the handle adjustment system from a locked position by pulling with the cable; and pivoting the handle relative to the housing.

A lawnmower includes: a mower deck defining a cutting area; a power source coupled to the mower deck; a handle coupled to the mower deck; a first motor selectively powered by the power source; a first drive shaft coupled to the first motor and defining an axis of rotation; a first blade assembly operatively coupled to the first drive shaft; a second motor selectively powered by the power source; a second drive shaft coupled to the second motor and defining an axis of rotation; and a second blade assembly operatively coupled to the second drive shaft. The power source is configured to simultaneously power the first motor and the second motor.

The lawnmower of any one or more of the embodiments, wherein both the first blade assembly and the second blade assembly are disposed in the cutting area.

The lawnmower of any one or more of the embodiments further comprising a front wheel assembly and a rear wheel assembly, wherein the front wheel assembly and the rear wheel assembly are parallel to each other to define a wheel base area extending from the front wheel assembly to the rear wheel assembly, further wherein a portion of the cutting area extends beyond the wheel base area.

The lawnmower of any one or more of the embodiments, wherein the portion of the cutting that extends beyond the wheel base defines a trim edge area, wherein the trim edge area is disposed between the front wheel assembly and the rear wheel assembly along a lateral side of the wheel base area.

The lawnmower of any one or more of the embodiments, further comprising a debris egress location in communication with the cutting area, wherein the debris egress location is disposed on an opposite side of the mower deck relative to the trim edge area.

The lawnmower of any one or more of the embodiments, wherein the cutting area comprises a maximum width, wherein the maximum width is in a range from about 20 inches to about 35 inches.

The lawnmower of any one or more of the embodiments, wherein the first blade assembly defines a first cutting path and the second blade assembly defines a second cutting path, wherein the first cutting path and the second cutting path are separated by a distance in a range from about 1 mm to about 20 mm at a closest point between the first cutting path and the second cutting path.

The lawnmower of any one or more of the embodiments, wherein the mower deck has a first direction extending between a first side and a second side, and a second direction extending between a third side and a fourth side, wherein the first direction and the second direction are generally perpendicular, further wherein the first motor and the second motor are offset from each other along both the first direction and the second direction.

The lawnmower of any one or more of the embodiments, wherein the first motor and the second motor are offset from each other at an angle in a range from about 10 degrees to about 40 degrees.

The lawnmower of any one or more of the embodiments, wherein the first motor and the second motor are offset from each other along the first direction by a distance in a range from about 50 mm to about 250 mm.

The lawnmower of any one or more of the embodiments, wherein the first motor and the second motor are offset from each other along the second direction by a distance in a range from about 200 mm to about 500 mm.

The lawnmower of any one or more of the embodiments, further comprising a pair of front wheels coupled by a front axle, a pair of rear wheels coupled by a rear axle, and at least one connecting bar extending from the front axle to the rear axle.

A walk behind power tool includes: a working tool housing; a power source coupled to the housing; a handle coupled to the housing; a wheel assembly configured to receive power from the power source; and a speed control assembly configured to control propulsion of the wheel assembly driven by the power source. The speed control assembly includes a user input paddle movable between at least a first position and a second position; a hall sensor configured to sense a change in position of the user input paddle; and a control board operatively coupled to the hall sensor, the wheel assembly and the power source. The hall sensor is configured to convert mechanical movement of the user input paddle into an electrical signal to the control switch board to control self-propulsion of the power tool.

The power tool of any one or more of the embodiments, wherein the user input paddle comprises a magnet, further wherein the hall sensor is configured to sense movement of the magnet of the user input paddle.

The power tool of any one or more of the embodiments, wherein the control board is a printed circuit board (PCB).

The power tool of any one or more of the embodiments, wherein the control board is disposed in the handle.

The power tool of any one or more of the embodiments, wherein in the first position of the user input paddle, the control board is configured to send zero power to the motor such that the power tool is not self-propelled.

The power tool of any one or more of the embodiments, wherein in the second position of the user input paddle, the control board is configured to send a signal to the power source to power the wheel assembly such that the power tool is self-propelled.

The power tool of any one or more of the embodiments, wherein the user input paddle comprises at least a third position in addition to the first position and the second position, further wherein the control board is configured to send a signal to the power source and the motor to operate the motor at a maximum speed when the user input paddle is in the third position.

The power tool of any one or more of the embodiments, further comprising a maximum speed input configured to set a maximum self-propulsion speed of the motor.

The power tool of any one or more of the embodiments, further comprising a start button coupled to the control board configured to enable the power source to be powered on.

The power tool of any one or more of the embodiments, wherein the start button is configured to be operatively coupled to an electrical switch, wherein the start button is configured to close the electrical switch in an "on" position and to open the electrical switch in an "off" position.

The power tool of any one or more of the embodiments, further comprising a bail handle, wherein when the bail handle is not engaged, the control board prevents the power source from sending power to the motor.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A power tool comprising:
a working tool housing;
a power source coupled to the housing;
a motor selectively powered by the power source;
a drive shaft coupled to the motor and defining an axis of rotation;
a handle coupled to the housing; and
a handle adjustment system configured to enable the handle to move between different positions relative to the housing, the handle adjustment system comprising:
a handle adjustment grip;
at least one cable coupled to the handle adjustment grip at a first end and coupled to a locking wedge at a second end; and
a spring,
wherein engagement of the handle adjustment grip in a first direction enables a position of the handle to be moved relative to the housing.

2. The power tool of claim 1, further comprising at least one handle bracket extending from the housing to the handle to couple the housing to the handle, wherein engagement of the handle adjustment grip in the first direction pulls the at least one cable such that the locking wedge at the second end of the cable is moved upward away from the housing to separate the handle from the handle bracket.

3. The power tool of any of the preceding claims, wherein a grip section of the handle can be moved toward the housing when the handle and the handle bracket are separated.

4. The power tool of any of the preceding claims, wherein the spring is configured to urge the locking wedge toward the handle bracket when the cable is not pulled by the handle adjustment grip.

5. The power tool of any of the preceding claims, wherein the handle adjustment grip comprises at least one arcuate groove, wherein the at least one cable is coupled to the at least one arcuate groove and the at least one cable is configured to be pulled into the at least one arcuate groove in a circumferential direction when the handle adjustment grip is engaged in the first direction; optionally wherein the arcuate groove is formed about a circumference of a wheel of the handle adjustment grip.

6. The power tool of any of the preceding claims, wherein the handle comprises a first elongated shaft, a second elongated shaft, and a grip section extending between the first elongated shaft and the second elongated shaft, further wherein the at least one cable extends within one of the first elongated shaft and the second elongated shaft; preferably wherein the at least one cable comprises a first cable and a second cable, wherein the first cable extends within the first elongated shaft and the second cable extends within the second elongated shaft.

7. The power tool of any of the preceding claims, wherein engagement of the handle adjustment grip in the first direction enables a grip section of the handle to be moved towards the housing; optionally wherein the handle adjustment grip is coupled to the grip section of the handle, further wherein the handle adjustment grip comprises a user engagement section extending from the grip section of the handle and at least one wheel rotatably mounted within the grip section of the handle.

8. The power tool of any of the preceding claims, wherein engagement of the handle adjustment grip in the first direction comprises rotation of the handle adjustment grip about an axis formed by a mounting axis of the at least one wheel within the grip section of the handle.

9. The power tool of any of the preceding claims, wherein the housing further comprises a debris egress location comprising a door configured to close or open an outlet of the debris egress location, wherein the door comprises a rotatable handle configured to pivot the door between a closed position and an open position.

10. The power tool of any of the preceding claims, wherein the power source comprises a battery, further comprising a battery locking mechanism configured to secure the battery in place relative to the housing; preferably wherein the battery locking mechanism comprises a lever and a spring, wherein in a first lever position, the spring exerts a force onto the lever to secure the lever into a detent on the battery, and in a second position, the spring exerts a force onto the lever to secure the lever into a detent in the housing, wherein the lever is rotatable from the first position to the second position.

11. The power tool of any of the preceding claims, wherein the housing comprises a baffle integrally formed on a lower side of the housing.

12. The power tool of any of the preceding claims, wherein the housing comprises at least one slot integrally formed with the housing configured to receive a motor controller therein.

13. The power tool of any of the preceding claims, wherein the housing comprises one or more snap-on features configured to secure one or more of an axle and a top cover of the power tool in place relative to the housing.

14. A handle adjustment mechanism configured for use with a walk behind power tool, the handle adjustment mechanism comprising:
a handle configured to be coupled to a working tool housing of the power tool, the handle comprising a first shaft, a second shaft, and a grip portion extending between the first shaft and the second shaft;
a handle adjustment grip;
at least one cable coupled to the handle adjustment grip at a first end and coupled to a locking wedge at a second end; and
a spring,
wherein engagement of the handle adjustment grip in a first direction enables a position of the handle to be moved relative to the working tool housing of the power tool.

15. A method of adjusting a handle of a walk behind power tool, the method comprising steps of:
providing a walk behind power tool, the power tool comprising a working tool housing, a handle coupled to the housing, and a handle adjustment system configured to enable the handle to move between different positions relative to the housing;
engaging a handle adjustment grip of the handle adjustment system in a first direction;
pulling a cable coupled to the handle adjustment grip in the first direction;
disengaging a locking wedge of the handle adjustment system from a locked position by pulling with the cable; and
pivoting the handle relative to the housing.
